Europäisches Patentamt

(19) European Patent Office

Office européen des brevets

(11) Veröffentlichungsnummer: **0 061 991**

**A2**

(12) # EUROPÄISCHE PATENTANMELDUNG

(21) Anmeldenummer: **82730030.2**

(22) Anmeldetag: **12.03.82**

(51) Int. Cl.³: **H 04 M 1/02**
**H 01 R 9/00**

(30) Priorität: **27.03.81 DE 3113122**

(43) Veröffentlichungstag der Anmeldung:
**06.10.82 Patentblatt 82/40**

(84) Benannte Vertragsstaaten:
**AT FR IT NL**

(71) Anmelder: **Fritz Kuke KG**
**Am Juliusturm 71-73**
**D-1000 Berlin 20(DE)**

(72) Erfinder: **Krumme, Petra**
**Lutherstrasse 26**
**D-1000 Berlin 20(DE)**

(72) Erfinder: **Überlée, Sylvia**
**Hakenfelder Strasse 8 C**
**D-1000 Berlin 20(DE)**

(74) Vertreter: **Diehl, Paul**
**Alt-Moabit 89**
**D-1000 Berlin 21(DE)**

(54) **Anschalteeinheit für Fernmeldeanlagen.**

(57) Anschlußdosen für Fernmeldeanlagen bestehen im wesentlichen aus Anschlußklemmen, die baulich mit einer mehrpoligen Steckdose vereinigt sind. Sie liegen zwischen Fernmeldenetz und der nachgeschalteten Fernmeldeanlage. Daneben sind Schalteinrichtungen in Gebrauch, die ebenfalls für die gesamte Fernmeldeanlage wirksam sei sollen. Diese werden bischer in der Nähe, auch unmittelbar neben einer herkömmlichen Anschlußdose montiert.

Durch die Erfindung wird eine Vereinfachung sowohl in fabrikatorischer als auch montagemäßiger Hinsicht dadurch erreicht, daß auf der Bodenplatte einer herkömmlichen Anschlußdose eine Leiterplatte montiert ist, die ein in Länge und Breite durch Weglassen der sonst damit zusammenhängenden Schraubklemmen reduziertes Anschlußdosen-Einbauteil sowie auf einer Seite dieses Anschlußdosen-Einbauteiles eine Schalteinrichtung, beispielsweise ein Relais trägt und daß das für die Baureihe übliche Gehäuse aufgesetzt ist.

Es wird also bei Anwendung der erfindungsgemäßen Anschalteeinheit für die Schalteinrichtung kein besonderes Gehäuse benötigt und es kann, trotz zusätzlicher Bestückung der Anschlußdose mit der weitereen Schalteinrichtung das herkömmliche Gehäuse dieser Schaltdose verwendet werden.

- 1 -

## Anschalteeinheit für Fernmeldeanlagen

Die Erfindung betrifft eine Anschalteeinheit für Fernmeldeanlagen, die dazu dienen soll, bei Verwendung an Reihenanlagen den Reihennebenstellen zu signalisieren, daß die Amtsleitung durch ein privates Zusatzgerät (Anrufbeantworter) belegt ist.

Hierfür benötigt man bisher eine herkömmliche Anschlußdose und daneben eine an eine Fernsprechleitung geschlossene Schalteinrichtung, die ein Signalstromkreis schließt, wenn die Amtsleitung durch das private Zusatzgerät belegt ist.

Der Erfindung liegt die Aufgabe zugrunde, die beiden Geräte in einem einzigen Gerät zu vereinigen, das hinsichtlich des Gehäuses und der Bodenplatte identisch ist mit der bisher üblichen Anschlußdose.

Erfindungsgemäß wird dies dadurch erreicht, daß auf der Bodenplatte eine Leiterplatte montiert ist, die ein in Länge und Breite durch Weglassen der sonst damit zusammenhängenden Schraubklemmen reduziertes Anschlußdosen-Einbauteil sowie auf einer Seite dieses Anschlußdosen-Einbauteiles Reihenklemmen und auf der anderen Seite dieses Anschlußdosen-Einbauteiles eine Schalteinrichtung, beispielsweise ein Relais trägt und daß das für die Baureihe übliche Gehäuse aufgesetzt ist.

Durch die angegebene Reduzierung der Länge und der Breite des herkömmlichen Anschlußdosen-Einbauteiles und der Verwendung handelsüblicher Reihenklemmen gewinnt man innerhalb des unveränderten Gehäuses einer Anschlußdose soviel freien Raum, daß jetzt darin
noch die Schalteinrichtung, beispielsweise ein
Reed-Relais, Platz hat. Schalteinrichtung, An-
schlußdosen-Einbauteil und Reihenklemmen werden
auf einer Leiterplatte montiert, so daß sich die
elektrischen Verbindungen ebenfalls raumsparend
und einfach herstellen lassen. Innerhalb des unverändert beibehaltenen Gehäuses einer einfachen
Anschlußdose ist mithin noch eine Anschalteeinrichtung untergebracht, so daß eine wichtige
Zusatzfunktion des äußerlich gleichen Gerätes
gewonnen worden ist.

Ein weiterer Vorteil der erfindungsgemäßen Anschalteeinheit ist der vereinfachte elektrische
Anschluß derselben, da jetzt lediglich noch eine
von der privaten Zusatzeinrichtung kommende Leitung angeklemmt werden muß.

Die Erfindung wird im folgenden anhand eines in
der Zeichnung dargestellten Ausführungsbeispieles
näher erläutert. Es zeigen:

Fig. 1 die Draufsicht des herkömlichen Anschlußdosen-Einbauteiles,

Fig. 2 den Querschnitt durch die erfindungsgemäße
   Anschalteeinheit mit aufgesetztem Gehäuse
   und

Fig. 3 die Draufsicht der erfindungsgemäßen
Anschalteeinheit mit abgenommenen Gehäuse.

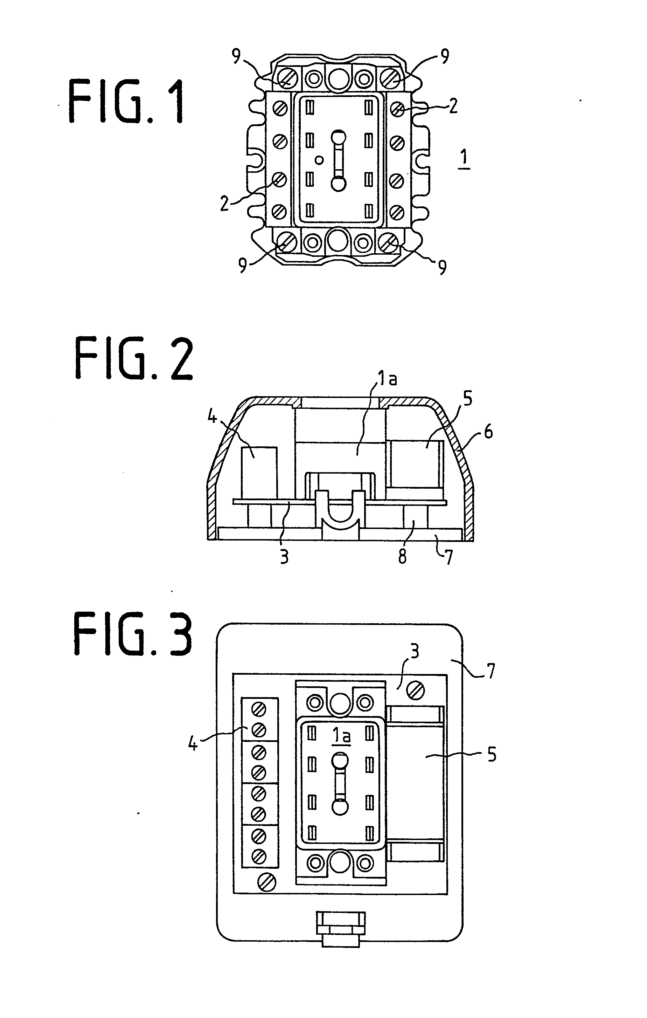

Gem. Fig. 1 ist der Rand des Anschlußdosen-Einbauteiles 1 mit Schraubklemmen 2 besetzt, die mit dem
gesamten Anschlußdosen-Einbauteil 1 aus einem Stück
bestehen.

In Fig. 3 ist das durch Fortlassen der Schraubklemmen 2 in seiner Breite und auch Länge erheblich
reduzierte Anschlußdosen-Einbauteil 1a wiedergegeben,
das jetzt, nachdem es auf die Leiterplatte 3 gesetzt
worden ist, erheblich weniger Einbauvolumen benötigt,
als etwa das Anschlußdosen-Einbauteil 1 gem. Fig. 1.
Es bleibt auf der Leiterplatte 3 noch genügend Platz,
um auf der einen Seite die benötigten acht Reihenklemmen 4 unterzubringen und auf der anderen Seite
des reduzierten Anschlußdosen-Einbauteiles 1a die
Schalteinrichtung 5 an die Leiterplatte 3 anzuschließen.

Die Reduzierung der Länge des Anschlußdosen-Einbauteiles 1 ergibt sich im wesentlichen daraus, daß
die Befestigungsschrauben 9 durch die Verbindung
des reduzierten Anschlußdosen-Einbauteiles 1a mit
der Leiterplatte 3 entbehrlich geworden sind und
mithin entfallen können.

Über die so bestückte Leiterplatte 3, die ihrerseits auf den Ansätzen 8 der Bodenplatte 7 einer

– 4 –

herkömmlichen Anschlußdose befestigt ist, wird,
wie Fig. 2 erkennen läßt, das Gehäuse 6 gesetzt,
das die neuen Elemente mit genügendem Spiel übergreift.

- 5 -

A n s p r ü c h e :

1. Anschalteeinheit für Fernmeldeanlagen, dadurch g e k e n n z e i c h n e t , daß auf der Bodenplatte (7) einer herkömmlichen Anschlußdose eine Leiterplatte (3) montiert ist, die ein in Länge und Breite durch Weglassen der sonst damit zusammenhängenden Schraubklemmen reduziertes Anschlußdosen-Einbauteil (1,1a) sowie auf einer Seite dieses Anschlußdosen-Einbauteiles (1,1a) Reihenklemmen (4) und auf der anderen Seite dieses Anschlußdosen-Einbauteiles (1,1a) eine Schalteinrichtung, beispielsweise ein Relais trägt und daß das für die Baureihe übliche Gehäuse (6) aufgesetzt ist.

FIG. 1

FIG. 2

FIG. 3